# EUROPEAN PATENT APPLICATION

(11) **EP 2 244 340 A2**
(43) Date of publication of application: **27.10.2010**
(21) Application number: 10160770.3
(22) Date of filing: 22.04.2010
(51) Int. Cl.: H01S 3/11, G02F 1/37, H01S 3/0941, H01S 3/131, G11B 7/125, G02F 1/03

(54) **Ultrashort pulse light source and two-photon absorption recording medium recording apparatus having the same**

(30) Priority: 23.04.2009 JP 2009104680
(71) Applicant: Fujifilm Corporation, Minato-ku Tokyo (JP)
(72) Inventor: Yamazoe, Shogo, Kanagawa-ken (JP)
(74) Representative: Klunker . Schmitt-Nilson . Hirsch

(57) **Abstract**

Providing a practical ultrashort pulse laser light source capable of recording information on two-photon absorption recording media at high-speed and stably. Providing a soliton mode-locked solid-state laser (10) that includes a resonator, a solid-state laser medium (16), a negative group velocity dispersion compensator (19) for compensating for group velocity dispersion within the resonator, and an excitation optical system (13) that outputs excitation light (Lo) for exciting the solid-state laser medium (16), and oscillates soliton pulse laser light (L) with a repetition frequency of not less than 1 GHz, an intensity modulator (30) that includes a waveguide electrooptic modulator (31) for modulating intensity of the soliton pulse laser light (L) and a driver (32) for applying a voltage to the waveguide electrooptic modulator (31) according to desired information, and a nonlinear optical element (40) for converting the intensity-modulated soliton pulse laser light (Lm) to a second harmonic wave.

## Description

### BACKGROUND OF THE INVENTION

### Field of the Invention

The present invention relates to an ultrashort pulse light source which can be modulated according to information and a recording apparatus, provided with the ultrashort pulse light source, for recording information on a recording medium of two-photon absorption material that allows information recording through nonresonant simultaneous two-photon absorption.

### Description of the Related Art

A recording method that uses a nonlinear optical phenomenon called as nonresonant simultaneous two-photon absorption (hereinafter, simply referred to as "two-photon absorption") is drawing attention as a next-generation high density optical recording method. A two-photon absorption material is induced only at a focal point of light having a high optical density. Consequently, an optical disk using a two-photon absorption recording medium may record information not only on the in-plane area but also on multiple layers in a depth direction, thereby capable of providing a large capacity.

Most of the current two-photon absorption materials, however, have extremely low two-photon absorption efficiencies. Consequently, use of large mode-locked ultrashort pulse solid-state lasers, such as a titanium-sapphire laser having an extremely high peak power, have been reported as laser light sources for writing information on two-photon absorption recording media.

More specifically, recording devices for recording information on recording media using two-photon absorption materials described above are proposed, for example, in Japanese Unexamined Patent Publication Nos. 2006-164451, 2006-196084, and the like.

Japanese Unexamined Patent Publication No. 2006-164451 proposes an optical recording/reproducing device having a light source that oscillates a pulse laser with a pulse width of not greater than 1 ps and a frequency of not less than 1 kHz as the light source for recording information in combination with a multi-photon absorption material. In particular, it discloses that the wavelength of the pulse laser is set to a value which is n-times the center wavelength λa of optical absorption spectrum of the multi-photon absorption material.

Japanese Unexamined Patent Publication No. 2006-196084 proposes the use, for a recording material (multi-photon absorption material) having a recording energy threshold of not greater than 10 nJ, of laser light with a pulse width of not greater than 1 ps and a lens with a NA of not less than 0.6 as the objective lens for focusing the laser light on the recording medium.

Japanese Unexamined Patent Publication Nos. 2006-164451 and 2006-196084 specifically describe examples in which Mai Tai® (Spectra physics KK) is used, which is a titanium-sapphire laser with a center wavelength of 800 nm, a pulse width of 100 fs, and a repetition frequency of 80 MHz.

Other general purpose ultrashort pulse lasers include, for example, a fiber mode-locked laser (IMURA) and the like. But, titanium-sapphire lasers are too expensive, large, and unstable to be a practical light source. Fiber mode-locked lasers are smaller and less expensive than titanium-sapphire lasers, but the pulse repetition frequency is about 50 MHz that does not allow writing at a high transfer rate. With the increase in the recording capacity, a huge amount of time is required if the writing at high transfer rate is prohibited. Thus, fiber mode-locked lasers can not be a practical light source after all.

In the mean time, an inexpensive, small, and highly stable laser that has achieved a repetition frequency in the GHz band has recently been developed in mode-locked solid-state lasers using an Nd- or Yb-doped solid-state laser medium and a saturable semiconductor mirror as described, for example, in U.S. Patent No. 7,693,192.

It is expected that a practical two-photon recording device can be realized by using a small mode-locked solid-state laser like that described in U. S. Patent No. 7, 693, 192. It is desirable, however, that the recording capacity is further increased. Consequently, based on the fact that the oscillation wavelength of the Nd- or Yb-doped solid-state laser medium of the small mode-locked solid-state laser described above is near 1 µm, it is conceivable to obtain, through a nonlinear optical element, a second harmonic wave of the oscillation light, as green light, and to use the green light as recording light. Use of two-photon absorption recording with the green light may realize a recording density per layer comparable to that of a blue-ray disk (BD).

Here, in order to perform recording according to desired information, it is necessary to actually modulate the recording light according to the desired information. But, any specific optical modulation method is not described in Japanese Unexamined Patent Publication Nos. 2006-164451, 2006-196084, and the like. Bulk body electrooptic modulation elements used for optical modulation of recording light in the existing optical disk recording devices can not deal with the GHz band, and hence it is a problem how to achieve the optical modulation of a green light pulse having a repetition frequency in the GHz band. Waveguide electrooptic modulators used in optical communications appear promising, but it is difficult to produce such a modulator that can be used for a wavelength in the visible wavelength range.

The present invention has been developed in view of the circumstances described above, and it is an object of the present invention to provide a practical ultrashort pulse laser light source capable of recording information on a two-photon absorption recording media at high-speed and stably. It is a further object of the present invention to provide a recording apparatus for a two-photon absorption recording medium having the ultrashort pulse laser light source described above.

### SUMMARY OF THE INVENTION

An ultrashort pulse laser light source of the present invention is a light source, including:
a soliton mode-locked solid-state laser that includes a resonator, a first end of which is formed of a semiconductor saturable absorption mirror, a solid-state laser medium doped with a rare earth or a transition metal and disposed inside of the resonator, a negative group velocity dispersion compensator for compensating for group velocity dispersion within the resonator, and an excitation optical system that outputs excitation light for exciting the solid-state laser medium, and oscillates soliton pulse laser light with a repetition frequency of not less than 1 GHz;
an intensity modulator, including a waveguide electrooptic modulator for modulating intensity of the soliton pulse laser light oscillated from the soliton mode-locked solid-state laser and a driver for applying a voltage to the waveguide electrooptic modulator according to desired information; and
a nonlinear optical element for converting the soliton pulse laser light intensity-modulated by the intensity modulator to a second harmonic wave.

Preferably, a group velocity dispersion compensator for compensating for group velocity dispersion that occurs in the soliton pulse laser light by passing through the waveguide electrooptic modulator is provided between the soliton mode-locked solid-state laser and the waveguide electrooptic modulator.

Preferably, the soliton mode-locked solid-state laser is a laser that oscillates soliton pulse laser light with a peak power of not less than 100 W (average output power of 0.05 W) and a pulse width of not greater than 1 ps. Preferably, the resonator is a linear resonator and the length of which is preferably not greater than 150 mm, and more preferably not greater than 75 mm.

Preferably, the light source further includes an optical splitter for splitting a portion of the soliton pulse laser light oscillated from the soliton mode-locked solid-state laser disposed between the soliton mode-locked solid-state laser and the waveguide electrooptic modulator and a photodetector for detecting the portion of the soliton pulse laser light split by the optical splitter, and an electrical signal from the photodetector is used as a clock signal for applying the voltage to the waveguide electrooptic modulator according to the desired information.

Preferably, the light source further includes an excitation light drive controller for controlling power of the excitation light such that the soliton pulse laser light is oscillated from the soliton mode-locked solid-state laser with a stable average power based on the electrical signal from the photodetector.

As for the waveguide electrooptic modulator, a modulator made of LiNbO₃ is preferably used.

As for the nonlinear optical element, an optical element made of one of periodically-poled LiNbO₃, periodically-poled LiTaO₃, and periodically-poled KTiOPO₄ is preferably used.

Preferably, the negative group velocity dispersion compensator is a negative dispersion mirror with an amount of negative dispersion in the range from - 3000 fs² to 0 fs² and a transmittance in the range from 0.1 % to 3%, and the negative dispersion mirror forms a second end of the resonator.

A two-photon absorption recording medium recording apparatus of the present invention is an apparatus that includes the ultrashort pulse laser light source described above as a recording light source for recording information on a two-photon absorption recording medium.

The ultrashort pulse laser light source of the present invention is configured to convert the soliton pulse laser light with a repetition frequency of not less than 1 GHz oscillated from the soliton mode-locked solid-state laser to a second harmonic wave after modulating the light by the intensity modulator. Thus, intensity modulation is performed using a fundamental wave before converting to a second harmonic wave, which allows the use of a conventional waveguide electrooptic modulator as the intensity modulator. The use of the ultrashort pulse laser light source allows information to be recorded on a two-photon absorption recording medium. In particular, the use of ultrashort pulse laser light with a repetition frequency of not less than 1 GHz, a peak power of not less than 100 W, and a pulse width of not greater than 1 ps allows the realization of practical information recording with an extremely high transfer rate. The ultrashort pulse laser light source of the present invention may use a small soliton mode-locked solid-state laser, so that a practical recording/reproducing apparatus may be realized, which is small, stable, and low cost.

### BRIEF DESCRIPTION OF THE DRAWINGS

Figure 1 illustrates an ultrashort pulse laser light source according to an embodiment of the present invention.
Figure 2 illustrates a two-photon absorption recording medium recording apparatus according to an embodiment of the present invention.

### DESCRIPTION OF THE PREFERRED EMBODIMENTS

Hereinafter, embodiments of an ultrashort pulse laser light source and a recording apparatus for a two-photon absorption recording medium of the present invention will be described with reference to the accompanying drawings.

### [Ultrashort Pulse Laser Light Source]

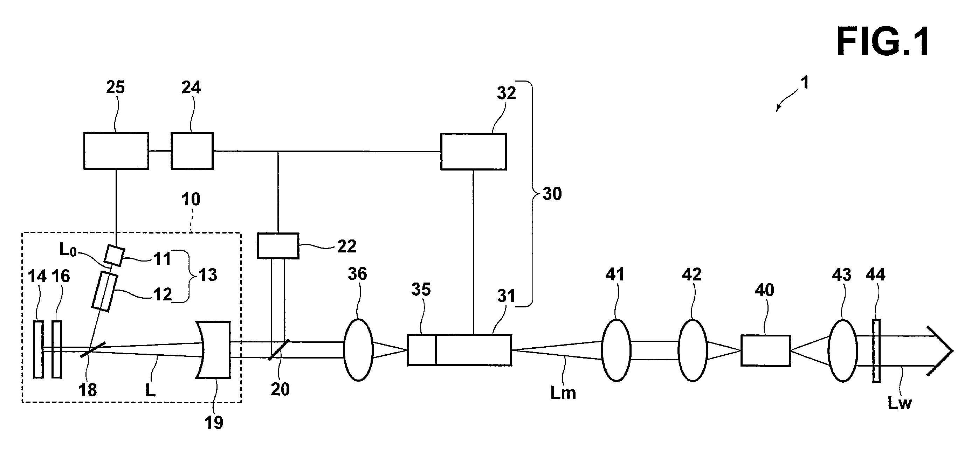

Ultrashort pulse laser light source 1 of the present embodiment will be described first. Figure 1 is a schematic view of ultrashort pulse laser light source 1 of the present embodiment, illustrating the schematic configuration thereof. As shown in Figure 1, ultrashort pulse laser light source 1 of the present embodiment includes a soliton mode-locked solid-state laser 10 that oscillates soliton pulse laser light with a repetition frequency not less than 1 GHz, a peak power of not less than 100 W, and a pulse width of not greater than 1 ps, intensity modulator 30 that includes waveguide electrooptic modulator 31 that performs intensity modulation on the soliton pulse laser light L oscillated by soliton mode-locked solid-state laser 10 and driver 32 that applies a voltage according to desired information to waveguide electrooptic modulator 31, and nonlinear optical element 40 that converts the soliton pulse laser light Lm intensity-modulated by intensity modulator 30 into a second harmonic wave.

Soliton mode-locked solid-state laser 10 includes SESAM (semiconductor saturable absorption mirror) 14 that forms a first end of a resonator, negative dispersion mirror 19 that forms a second end of the resonator and also serves as the output mirror, solid-state laser medium 16 disposed inside of the resonator formed of SESAM 14 and negative dispersion mirror 19, excitation optical system 13 that supplies excitation light Lo from an oblique direction with respect to optical axis of the resonator, and dichroic mirror 18 disposed so as to form Brewster's angle with respect to the optical axis of the resonator to reflect excitation light Lo supplied by excitation optical system 13 toward solid-state laser medium 16 and transmits oscillation light L resonating in the resonator. Excitation optical system 13 includes semiconductor laser 11 that emits the excitation light Lo and SELFOC lens 12 that focuses the excitation light Lo on the solid-state laser medium.

In the configuration described above, excitation light Lo supplied by excitation optical system 13 from an oblique direction with respect to the optical axis of the resonator is reflected by dichroic mirror 18 to incident on solid-state laser medium 16, which causes solid-state laser medium 16 to be excited and light generated thereby oscillates by the operation of the resonator. A portion of laser oscillation light (pulse laser light) L transmits through output mirror (negative dispersion mirror) 19 and exits to the outside. In this configuration, the laser light L oscillating in the resonator forms a beam waist only on SESAM 14. Solid-state laser medium 16 and SESAM 14 are disposed close enough to allow the oscillation light L to oscillate sufficiently without a beam waist thereof being formed on solid-state laser medium 16.

As for solid-state laser medium 16, a solid-state laser crystal that can realize an oscillation wavelength appropriate for the characteristics of a target recording medium is selected and used from those that can realize an oscillation wavelength, for example, in the range from about 760 nm to about 1100 nm. Specific examples include the following, but not limited to: Yb:KGW (KGd(WO₄)₂), Yb:KYW (KY((WO₄)₂), Yb:YAG (Y₃Al₅O₁₂), Yb:Y₂O₃, Yb:SC₂O₃, Yb:Lu₂O₃, Yb:GdCOB(Ca₄GdO(BO₃)₃)_{,} Yb:SYS (SrY₄(SiO₄)₃), Yb:BOYS (Sr₃Y(BO₃)₃), Yb:YVO₄, Yb:GdVO₄, Alexandrite (Cr:BeAl₂O₄), Cr:LiSAF (LiSrAlF₆), Cr:LiSGAF (LiSrGaF₆), Cr:LiCAF (LiCaAlF₆), Cr: forsterite (Mg₂SiO₄), Cr:YAG (Y₃Al₅O₁₂) , Cr:Ca₂GeO₄, Ti:Al₂O₃, Nd:Glass, and Er:Yb:Glass. For example, the following oscillation wavelengths maybe obtained by the following media: 1045 nm by Yb:KYW, 1030 nm to 1100 nm by Yb:YAG, 1000 nm or 1045 nm by Yb:KGW, 1075 nm by Yb:Y₂O₃, 1041 nm by Yb:Sc₂O₃, and 1060 nm by Nd:Glass. Further, an oscillation wavelength in the range from 760 nm to 1000 nm may be obtained by Cr:LiSAF, Cr:LiCAF, or Alexandrite.

The thickness of solid-state laser medium 16 and the rare earth dopant concentration are determined so that the excitation light is absorbed sufficiently, for example, with an absorption efficiency of 90%.

Negative dispersion mirror 19 compensates for group velocity dispersion within the resonator and also a positive chirp arising from self phase modulation that occurs in solid-state laser medium 16 due to a high peak power of the optical pulse in the resonator. Preferably, though depending on the operating conditions, the amount of dispersion is in the range from 0 to - 3000 fs². The amount of dispersion is set such that the entire group velocity dispersion in the resonator is not greater than 0 . Optimum output may be obtained by setting, through mirror design, the transmittance T of negative dispersion mirror 19, that is, the output coupling ratio in the range from about 0.5 to about 3%.

The curvature radius of negative dispersion mirror 19 is calculated and determined by Gaussian beam propagation design, but it is preferable that negative dispersion mirror 19 is designed to have a curvature radius comparable to the resonator length in order to make the spot diameter (beam waist of the oscillating light) of the resonator as small as possible and a hemispherical shape. This may keep the resonator spot diameter about 50 µm, whereby the Q-switch phenomenon arising from reduced resonator length may be prevented. At the same time, favorable spatial matching with the spot diameter of the excitation light may also be achieved, thereby resulting in high efficiency.

Dichroic mirror 18 is coated with a material which is highly reflective to the wavelength of the excitation light Lo and low reflective to the wavelength of the oscillation light L, whereby highly efficient excitation and low internal loss are realized.

Preferably, the resonator length of mode-locked solid-state laser 10 of the present embodiment is not greater than 150 mm, and more preferably not greater than 75 mm. The resonator length not greater than 150 mm may realize a repetition frequency of not less than 1 GHz, and the resonator length not greater than 75 mmmay realize a repetition frequency of not less than 2 GHz.

Mode-locked solid-state laser 10 of the present embodiment further includes beam splitter 20 that reflects a portion of oscillation light L outputted from negative dispersion mirror 19 and photodetector 22 that receives the portion of oscillation light L reflected by beam splitter 20 and converts the received light to an electrical signal, which is used by driver 32 as the clock signal for applying a voltage to electrooptic modulator 31 in intensity modulator 30.

The electrical signal from the photodetector 22 is also inputted to LD driver 25 that controls output of semiconductor laser 11 through lowpass filter 24 to control the voltage applied to semiconductor laser 11 such that the light intensity detected by photodetector 22 becomes substantially constant. That is, in the present embodiment, beam splitter 20, photodetector 22, lowpass filter 24, and LD driver constitute an excitation light drive controller.

As for waveguide electrooptic modulator 31, a waveguide electrooptic modulator made of LiNbO₃ is preferably used. Generally, waveguide electrooptic modulators are not used in conventional optical disk recording devices because they have a large loss. Soliton Mode-locked solid-state laser 10 may provide output power sufficient to support the loss of a waveguide electrooptic modulator. When soliton pulse laser light L passes through waveguide electrooptic modulator 31, the pulse width is broadened due to positive chirp and also the average output power is reduced, but the ultrashort pulse laser light source 1 of the present embodiment includes group velocity dispersion compensator 35 for compensating for group velocity dispersion that occurs in soliton pulse laser light L by passing through waveguide electrooptic modulator 31 between soliton mode-locked solid-state laser 10 and waveguide electrooptic modulator 31. Group velocity dispersion compensator 35 may compensate for the positive chirp caused by waveguide electrooptic modulator 31 and broadening of the pulse width may be prevented. If broadening of the pulse width is within an allowable range, group velocity dispersion compensator 35 is not required.

As for nonlinear optical element 40, a periodically poled device with the polarization reversal period set to an optimum value for the oscillation wavelength of mode-locked solid-state laser 10. More specifically, PPKTP (periodically-poled KTiOPO₄), PPLN (periodically-poled LiNbO₃), or PPLT (periodically-poled LiTaO₃) is preferably used.

Ultrashort pulse laser light source 1 of the present embodiment further includes condenser lens 36 for focusing the laser light L oscillated and outputted from soliton mode-locked solid-state laser 10 on electrooptic modulator 31, collimator lens 41 for collimating the laser light Lm modulated by electrooptic modulator 31, condenser lens 42 for further focusing the laser light Lm on nonlinear optical element 40, and collimator lens 43 for collimating light outputted from nonlinear optical element 40. The light source further includes filter 44 for separating near infrared light transmitted through nonlinear optical element 40 from the second harmonic wave. The light passed through filter 44 is second harmonic ultrashort pulse laser light Lw.

Specific configuration (examples) of the components of mode-locked solid-state laser 10 according to one embodiment described above will now be described.

As for semiconductor laser 11 of excitation optical system 13, a semiconductor laser (OPTOENERGY Inc.) that outputs excitation light with, for example, a center wavelength of 980 nm, an emitter with of 50 µm, and a maximum output power of 2.7 W was used. SELFOC lens 12 is a lens for focusing the excitation light outputted from semiconductor laser 11 on the solid-state laser with a focused spot diameter of 50 µmϕ.

As for solid-state laser medium 16, Yb:KYW (Yb:KY(WO₄)₂) with a thickness of 1.5 mm and a Yb concentration of 5 at% was used. Each surface of solid-state laser medium 16 was subjected to optical polishing and is provided with an antireflection coating having a reflectance of not greater than 0.2% with respect to the wavelength of 1045 ± 10 nm of the oscillation light.

As for SESAM 14, a SESAM with a modulation depth (ΔR) of 0.4% for the wavelength of 1045 nm and a saturation fluence (Fₛₐₜ) of 70 µJ/cm²_{.}

Negative dispersion mirror 19 is provided with a coating having a dispersion amount of - 800 fsec² and a transmittance of 1.8% with respect to the wavelength of 1045 ± 10 nm of the oscillation light on the concave surface side and a coating having a reflectance of not greater than 1% with respect to the wavelength of 1045 ± 10 nm of the oscillation light on the planar surface side. The curvature radius of the mirror surface (concave surface) was 50 mm. The distance from negative dispersion mirror 19 to SESAM 14 or resonator length was 50 mm.

As for dichroic mirror 18, a dichroic mirror provided with a coating having a reflectance of not less than 95% with respect to the wavelength of the excitation light and a reflectance of not greater than 0.2% with respect to the wavelength of the oscillation light.

The inventor of the present invention has confirmed that mode-locked solid-state laser 10 configured in the manner as in the example described above is able to output ultrashort pulse laser light with a center frequency of 1045 nm, an average output power of 700 mW, a pulse width of 220 fs, and a repetition frequency of 2.85 GHz.

As for the beam splitter 20, a silica plate provided with a coating having a reflectance of 1% with respect to the wavelength of 1045 ± 10 nm of the oscillation light was used. The light reflected by the silica plate is detected by high-speed photodetector 22. As for condenser lens 36 for condensing the pulse laser light L transmitted through the silica plate on the group velocity dispersion compensator, a micro art lens with a focal length of 4.5 mm.

In the example configuration, group velocity delay compensator 35 was not provided, and the macro art lens was arranged such that the pulse laser light L is coupled to a not shown optical fiber connected to waveguide electrooptic modulator 31. As for waveguide electrooptic modulator 31, NIR-MX-LN-series of Photoline Technologies was used.

The configuration described above could couple about 70% of the pulse laser light L from the mode-locked solid-state laser to waveguide electrooptic modulator 31 and output pulse laser light with an average output power of 500 mW and a pulse width of 400 fs from electrooptic modulator 31 when the pulse laser light was not modulated (voltage OFF) . When group velocity dispersion compensator 35 was employed, the average output power was 400 mW and the pulse width was 250 fs.

As for nonlinear optical element 40, a 4.8 mm long PPKTP crystal having an inverted domain corresponding to the oscillation wavelength of 1045 nm formed therein was used.

The laser light Lm outputted from electrooptic modulator 31 is focused on the PPKTP crystal through collimator lens 41 and condenser lens 42, and light converted to second harmonic (SHG) by PPLTP crystal transmits through filter 44 and exits from ultrashort pulse laser light source 1 of the present embodiment as output light Lw.

By converting the unmodulated ultrashort pulse laser light Lm described above to the second harmonic wave, green ultrashort pulse laser light with a wavelength of 522 nm, a pulse width of 450 fs, an average output power of 40 mW, and a peak power of 30 W could be obtained. Further, the green pulse light could be outputted at any timing through the modulation control performed by modulator 30 using an electrical signal from photodetector 22 as the clock signal.

The use of the ultrashort pulse laser light source of the present embodiment may realize an extremely practical recording on a two-photon absorption recording medium.

In the example configuration, Yb:KYW was used as the solid-state laser medium, but an oscillation wavelength in the range from 760 nm to 1100 nm may be realized by appropriately selecting a combination of laser crystal and dopant (rare earth or transition metal) for the solid-state laser medium, and further, in combination with a SHG device, laser light with a wavelength in the range from 380 nm to 550 nm can be outputted as a second harmonic wave.

### <Two-photon Absorption Recording Medium Recording/Reproducing Apparatus>

Next, as an embodiment of the two-photon absorption recording medium recording apparatus of the present invention having ultrashort pulse laser light source 1, recording/reproducing apparatus 2 that further has a reproducing function for reading out information from a two-photon absorption recording medium will be described.

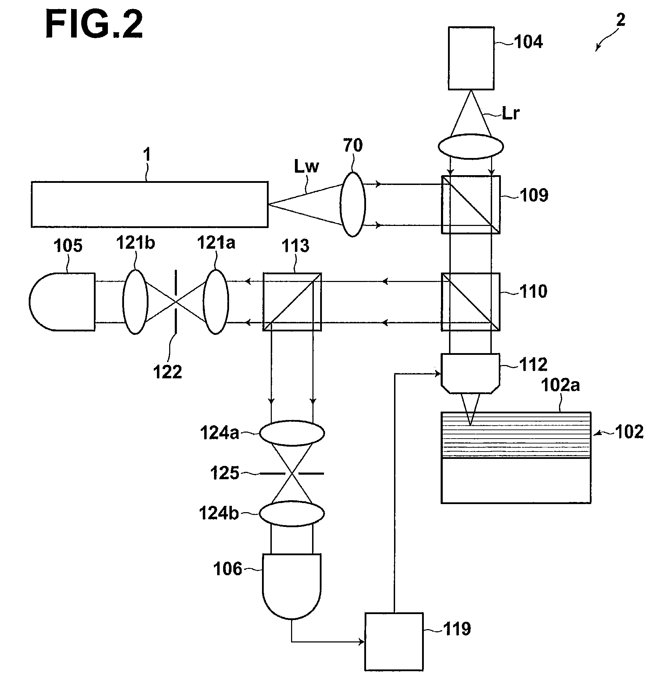

Figure 2 is a schematic configuration diagram of recording/reproducing apparatus 2 according to the present embodiment for a two-photon absorption recording medium. Recording layer 102a of recording medium 102 used by recording/reproducing apparatus 2 of the present embodiment for recording or reproducing information is provided with a two-photon absorption material, and is able to record information through two-photon absorption when irradiated with recording light having a wavelength, for example, in the range from 380 to 550 nm. The recording layer may be a layer that generates reflection light of readout light changed in the refractive index (having the same wavelength as the readout light) as signal light or a layer that generates fluorescence with wavelength of, for example, in the range from 420 to 700 nm as signal light. In the present embodiment, the description will be made of a case in which a layer that generates fluorescence is used.

Two-photon absorption recording medium recording /reproducing apparatus 2 of the present embodiment includes ultrashort pulse laser light source 1 that outputs ultrashort pulse laser light with a repetition frequency of not less than 1 GHz as recording light Lw for inducing two-photon absorption in recording layer 102a of two-photon absorption recording medium 102 and recording information thereon, readout laser light source 104 that outputs readout light Lr for reading out information from two-photon absorption recording medium 102, and photodetector 105 that detects signal light (fluorescence) Ls from two-photon absorption recording medium 102 irradiated with the readout light Lr.

Recording/reproducing apparatus 2 further includes collimator lens 70 that collimates the ultrashort pulse laser light Lw from ultrashort pulse laser light source 1, dichroic beam splitter 109 that reflects the ultrashort pulse laser light Lw toward recording medium 102 and transmits the readout light Lr. Apparatus 2 further includes half mirror 110 and objective lens 112 between dichroic beam splitter 109 and recording medium 102. Objective lens 112 has an aberration correction function. The recording light of ultrashort pulse laser light Lw is reflected by dichroic beam splitter 109 and emitted on recording medium 102 through half mirror 110 and objective lens 112. The readout light Lr from readout light source 104 is emitted on recording medium 102 through dichroic beam splitter 109, half mirror 110, and objective lens 112.

Dichroic beam splitter 113 and a confocal optical system are disposed between recording medium 102 and photodetector 105 that detects the signal light Ls from recording medium 102. The confocal optical system includes lens 121a, 121b, and pinhole 122. The signal light Ls is reflected by half mirror 110, transmitted through dichroic beam splitter 113, passed through the confocal optical system, and detected by photodetector 105.

The recording/reproducing apparatus further includes driving mechanism 119 that moves objective lens 112 along the optical axis as a mechanism for changing the light condensing position where recording light Lw is condensed in a depth direction of the recording layer of the recording medium. The recording/reproducing apparatus includes, as a light condensing position correction means, photodetector 106 that detects return light Lw' reflected back from dichroic beam splitter 113, and driving mechanism 119 is configured to receive a signal from photodetector 106 and to correct the focus position. A confocal optical system that includes lens 124a, 124b, and pinhole 125 is provided between dichroic beam splitter 113 and photodetector 106. Here, a configuration may be adopted in which a mechanism that moves the recording medium in the optical directions of the laser light is provided instead of driving mechanism 119 for moving the objective lens, and the focus position is changed in a depth direction. Alternatively, the both may be movably formed.

Readout laser light source 104 may be anything as long as it can output readout light Lr that complies with the target two-photon absorption recording medium.

In two-photon absorption recording medium recording /reproducing apparatus 2 configured in the manner as described above, when information is recorded, ultrashort pulse laser light Lw modulated by an intensity modulator according to information to be recorded is outputted from ultrashort pulse laser light source 1, and the pulse laser light Lw is emitted to recording medium 102, whereby the information is recorded on the recording layer of recording medium 102. The pulse laser light Lw outputted from light source 1 is reflected by dichroic beam splitter 109 toward recording medium 102 and emitted on recording medium 102 through half mirror 110 and objective lens 112. At this time, objective lens 112 is driven by driving mechanism 119 to condense the pulse laser light Lw at a desired position in a depth direction. Two-photon absorption occurs only at the area where the pulse laser light Lw is condensed, whereby the material property at the light condensed area is changed and becomes a compound that generates fluorescence when irradiated with the readout light. When the pulse laser light Lw is emitted onto recording medium 102, return light Lw' is returned from recording medium 102, which propagates in the opposite direction of the optical axis of the pulse laser light Lw, reflected by half mirror 110, further reflected by dichroic beam splitter 113, and detected by photodetector 106 through the confocal optical system. Then, based on a signal outputted from photodetector 106, driving mechanism 119 corrects the focus position.

In the mean time, when information is read out, readout light Lr is outputted from readout laser light source 104, which transmits through dichroic beam splitter 109, propagates along the same axis as that of the recording pulse laser light Lw, passes through half mirror 110 and objective lens 112, and illuminates recording layer 102a of recording medium 102. This causes fluorescence to be generated from a recording area as a signal light Ls, which propagates in the opposite direction along the optical axis of readout light, reflected by half mirror 110 and detected by photodetector 105 through dichroic beam splitter 113 and the confocal optical system, whereby information is read out.

As described above, recording/reproducing apparatus 2 is provided with ultrashort pulse laser light source 1, so that the apparatus may realize practical recording on a two-photon absorption recording medium using green pulse light modulated according to information to be recorded as the recording light.

## Claims

1. An ultrashort pulse laser light source, comprising:
a soliton mode-locked solid-state laser (10) that comprises a resonator, a first end of which is formed of a semiconductor saturable absorption mirror (14), a solid-state laser medium (16) doped with a rare earth or a transition metal and disposed inside of the resonator, a negative group velocity dispersion compensator (19) for compensating for group velocity dispersion within the resonator, and an excitation optical system (13) that outputs excitation light (Lo) for exciting the solid-state laser medium (16), and oscillates soliton pulse laser light (L) with a repetition frequency of not less than 1 GHz;
an intensity modulator (30) comprising a waveguide electrooptic modulator (31) for modulating intensity of the soliton pulse laser light (L) oscillated from the soliton mode-locked solid-state laser (10) and a driver (32) for applying a voltage to the waveguide electrooptic modulator (31) according to desired information; and
a nonlinear optical element (40) for converting the soliton pulse laser light (Lm) intensity-modulated by the intensity modulator (30) to a second harmonic wave.

2. The ultrashort pulse laser light source of claim 1, further comprising a group velocity dispersion compensator (35) for compensating for group velocity dispersion that occurs in the soliton pulse laser light (L) by passing through the waveguide electrooptic modulator (31) between the soliton mode-locked solid-state laser (10) and the waveguide electrooptic modulator (31).

3. The ultrashort pulse laser light source of claim 1 or 2, **characterized in that**:
the light source further comprises an optical splitter (20) for splitting a portion of the soliton pulse laser light (L) oscillated from the soliton mode-locked solid-state laser (10) disposed between the soliton mode-locked solid-state laser (10) and the waveguide electrooptic modulator (31) and a photodetector (22) for detecting the portion of the soliton pulse laser light (L) split by the optical splitter (20); and
an electrical signal from the photodetector (22) is used as a clock signal for applying the voltage to the waveguide electrooptic modulator (31) according to the desired information.

4. The ultrashort pulse laser light source of claim 3, further comprising an excitation light drive controller (25) for controlling power of the excitation light (Lo) such that the soliton pulse laser light (L) is oscillated from the soliton mode-locked solid-state laser (10) with a stable average power based on the electrical signal from the photodetector (22).

5. The ultrashort pulse laser light source of any of claims 1 to 4, **characterized in that** the waveguide electrooptic modulator (31) is made of LiNbO₃,

6. The ultrashort pulse laser light source of any of claims 1 to 5, **characterized in that** the nonlinear optical element (40) is made of one of periodically-poled LiNbO₃, periodically-poled LiTaO₃, and periodically-poled KTiOPO₄.

7. The ultrashort pulse laser light source of any of claims 1 to 6, **characterized in that** the negative group velocity dispersion compensator is a negative dispersion mirror (19) with an amount of negative dispersion in the range from - 3000 fs² to 0 fs² and a transmittance in the range from 0.1 % to 3%, and the negative dispersion mirror (19) forms a second end of the resonator.

8. A two-photon absorption recording medium recording apparatus, comprising the ultrashort pulse laser light source (1) of any of claims 1 to 7 as a recording light source for recording information on a two-photon absorption recording medium (102).
